# EUROPEAN PATENT APPLICATION

(11) **EP 3 955 193 A1**
(43) Date of publication of application: **16.02.2022**
(21) Application number: 21190486.7
(22) Date of filing: 10.08.2021
(51) Int. Cl.: G06Q 10/08, G06Q 50/28

(54) **DEVICE METHOD, SYSTEM AND COMPUTER READABLE STORAGE MEDIUM TO MANAGE DELIVERY GOODS DELIVERED TO A BUILDING**

(30) Priority: 11.08.2020 KR 20200100521
(71) Applicant: ParkingCloud Co., Ltd., Seoul Yeongdeungpo-gu 07276 (KR); Shin, Sang Yong, Seoul Gangseo-gu 07548 (KR)
(72) Inventor: SHIN, Sang Yong, 07548 Seoul (KR); HEO, Won Jin, 07276 Seoul (KR)
(74) Representative: Forresters IP LLP

(57) **Abstract**

A method to manage a parcel delivered to a collective building is suggested. This method includes: a process of receiving, from a management device of a first parcel locker, a first parcel delivery signal including an address to which a first parcel delivered to the first parcel locker is due to be delivered and a time at which the first parcel was delivered to the first parcel locker; a process of generating, in response to receipt of the first parcel delivery signal, a first delivery notice signal including the delivery address and the delivery time included in the first parcel delivery signal and information about a place to which the first parcel was delivered; and a process of transmitting the generated first delivery notice signal to a parking management local server configured to manage a parking lot of the collective building.

## Description

### TECHNICAL FIELD

The present disclosure relates to a device, method, system and computer-readable storage medium to manage a parcel delivered to a collective building, and more particularly, to a device, method, system and computer-readable storage medium to appropriately notify a user or resident at an address, to which a parcel is due to be delivered, of delivery of the parcel when the parcel is delivered by parcel delivery service or the like to a collective building composed of a plurality of individual dwelling units, such as apartments or a shopping mall, and then kept in a delivery parcel locker such as an unmanned parcel locker.

### BACKGROUND

Unless otherwise indicated herein, the materials described in this section are not prior art to the claims in this application and are not admitted as prior art by inclusion in this section.

Recently, as the number of on-line shopping malls has increased, the number of parcels delivered to a collective building such as an apartment has also increased. If a parcel is delivered during an absent of a user due to various reasons, such as work or going out, it may be difficult for the user to receive the parcel at the time of delivery. Therefore, when the user is not at home at the time of delivery, a deliverer leaves the parcel outside a front door in some cases. However, if the parcel is left outside the front door, it is highly likely to be lost. Also, a dispute will occur due to the loss of the parcel. In order to avoid the loss of the parcel and the dispute, a parcel locker, such as an unmanned parcel locker, may be installed at a collective building, such as an apartment. When a parcel is delivered at a conventional parcel locker, an arrival notice is sent to a mobile device of a user. However, such arrival notice is received at the time of delivery, and thus, it may be difficult for the user to immediately receive the parcel even if the arrival notice is sent. If time passes after the delivery of the parcel, the user may forget to receive the delivered parcel, and after arrival at home, may need to move again between home and the parcel locker.

In this regard, Korean Patent Publication No. 10-2006-0030796 discloses that a message of guidance information is provided by executing a predetermined guidance information providing service on a mobile device of a user, using a vehicle license number recognized at a parking lot. Herein, the message of guidance information is determined based on a list of requested services preset by the user, and the user may also set an arrival notice of mail and parcel. However, it is difficult for a user, particularly a driver, who uses the parking lot, to check the message on his or her mobile device when the user enters the parking lot and parks the vehicle. Also, if the user's phone number has not been registered, the user cannot receive the message. Therefore, it is difficult for the user to receive information about the delivered parcel in time.

(Patent Document 1) Korean Patent Publication No. 10-2006-0030796.

### SUMMARY

In view of the foregoing, the present disclosure provides a method, device, system and computer-readable storage medium to provide a user at a delivery address with an arrival notice of a parcel in various manners in time.

According to an embodiment of the present disclosure, a method to manage a parcel delivered to a collective building is suggested. This method is performed on a delivery parcel management server and may include receiving, from a management device of a first parcel locker, a first parcel delivery signal including an address to which a first parcel delivered to the first parcel locker is due to be delivered and a time at which the first parcel was delivered to the first parcel locker, in response to receipt of the first parcel delivery signal, generating a first delivery notice signal including the delivery address and the delivery time included in the first parcel delivery signal and information about a place to which the first parcel was delivered, and transmitting the generated first delivery notice signal to a parking management local server configured to manage a parking lot of the collective building. Herein, the first parcel locker may be located at, for example, an underground parking lot. The parking management local server includes a first database including each address of the collective building and information about a vehicle license number of a vehicle and a user related to the address and is configured to add, to the first database, information about the delivery of the first parcel in association with the delivery address included in the first delivery notice signal in response to receipt of the first delivery notice signal, check whether the vehicle related to the delivery address included in the first delivery notice signal has entered the parking lot, and display the information about the delivery of the first parcel delivered to the first parcel locker through a display installed at the entrance to the parking lot.

According to some embodiments of the present disclosure, a system to manage a parcel delivered to a collective building is suggested. This system may include a management device of a first parcel locker that manages delivery and retrieval of a parcel kept in a first parcel locker configured to keep the parcel delivered to the collective building, a parking management local server configured to manage a parking lot of the collective building, and a delivery parcel management server communicatively connected to each of the management device of the first parcel locker and the parking management local server. Herein, the first parcel locker may be located at, for example, an underground parking lot. The delivery parcel management server may be configured to receive, from the management device of the first parcel locker, a first parcel delivery signal including an address to which a first parcel delivered to the first parcel locker is due to be delivered and a time at which the first parcel was delivered to the first parcel locker, in response to receipt of the first parcel delivery signal, generate a first delivery notice signal including the delivery address and the delivery time included in the first parcel delivery signal and information about a place to which the first parcel was delivered, and transmit the generated first delivery notice signal to the parking management local server. Also, the parking management local server includes a first database including each address of the collective building and information about a vehicle license number of a vehicle and a user related to the address and is configured to add, to the first database, information about the delivery of the first parcel in association with the delivery address included in the first delivery notice signal in response to receipt of the first delivery notice signal, check whether the vehicle related to the delivery address included in the first delivery notice signal has entered the parking lot, and display the information about the delivery of the first parcel delivered to the first parcel lockerthrough a display installed at the entrance to the parking lot.

According to some embodiments of the present disclosure, a computer-readable storage medium that stores a program to manage a parcel delivered to a collective building is suggested. This program may include one or more instructions, when executed by a computing device, cause the computing device to perform: receiving, from a management device of a first parcel locker, a first parcel delivery signal including an address to which a first parcel delivered to the first parcel locker is due to be delivered and a time at which the first parcel was delivered to the first parcel locker, generating, in response to receipt of the first parcel delivery signal, a first delivery notice signal including the delivery address and the delivery time included in the first parcel delivery signal and information about a place to which the first parcel was delivered, and transmitting the generated first delivery notice signal to a parking management local server configured to manage a parking lot of the collective building.

The foregoing summary is illustrative only and is not intended to be in any way limiting. In addition to the illustrative embodiments and features described above, further embodiments and features will become apparent by reference to the drawings and the following detailed description.

### BRIEF DESCRIPTION OF THE DRAWINGS

The foregoing and other features of the present disclosure will be described in detail with reference to the accompanying drawings. Understanding that these drawings depict only several examples in accordance with the disclosure and are, therefore, not to be considered limiting of its scope, the disclosure will be described with additional specificity and detail through use of the accompanying drawings, in which:
**FIG. 1** illustrates an illustrative delivery parcel management system according to at least some embodiments of the present disclosure;
**FIG. 2** illustrates an example where when a vehicle enters a parking lot inside a collective building, information about a parcel delivered to a first parcel locker is provided according to at least some embodiments of the present disclosure;
**FIG. 3** illustrates an example of a system in which a parking management local server, a user mobile device and a parking management central server are communicatively connected via a network according to at least some embodiments of the present disclosure;
**FIG. 4** is a flowchart showing an illustrative process of a delivery parcel management method according to at least some embodiments of the present disclosure;
**FIG. 5** is a flowchart showing an illustrative process of a delivery parcel management method according to at least some other embodiments of the present disclosure;
**FIG. 6** is a flowchart showing an illustrative process of a delivery parcel management method according to at least some other embodiments of the present disclosure;
**FIG. 7** illustrates a computer program product that can be used to manage a delivery parcel according to at least some embodiments of the present disclosure; and
**FIG. 8** is a block diagram showing an illustrative example of a computing device arranged according to at least some embodiments of the present disclosure.

### DETAILED DESCRIPTION

Hereafter, embodiments and examples will be described in detail with reference to the accompanying drawings so that the present disclosure may be readily implemented by a person with ordinary skill in the art. However, it is to be noted that the present disclosure is not limited to the embodiments and examples but can be embodied in various other ways.

The present disclosure generally relates to a system, method and computer-readable storage medium to manage a delivery parcel at a collective building, and a program stored in the computer-readable storage medium.

In the present disclosure, the collective building includes an apartment, a studio apartment building, an office building, an apartment type factory, row houses and a tenement that can be structurally separated into a plurality of parts which can be used as separate buildings. Also, the parcel delivered to the collective building may be delivered by parcel delivery service, postal service or various delivery services. The collective building according to the present disclosure may be equipped with a delivery parcel locker, such as an unmanned parcel locker, in which the delivered parcel can be kept. The delivery parcel locker may be composed of a plurality of individual lockers (each of which is equipped with a lock) like coin lockers at a subway station, a management device configured to manage keeping and receipt of parcels in these individual lockers, and a user interface (e.g., a touch screen) configured for a parcel deliverer and a user to keep and retrieve a parcel. Also, the parcel locker may be located at several places, such as an underground parking lot and a lobby, inside the collective building. A parcel deliverer may put a parcel into a specific locker of the delivery parcel locker and input an address, to which the parcel is due to be delivered, or the like to the user interface.

A delivery parcel management system according to the present disclosure includes a delivery parcel management server configured to overall manage delivery parcels, and the delivery parcel management server is communicatively connected to a management device of a parcel locker. Thus, when a parcel is kept in the parcel locker, the delivery parcel management server receives information indicating that the parcel has been kept and information about the delivery address of the parcel. The delivery parcel management server may be configured to give parcel delivery information received from several parcel lockers to users at the delivery addresses of respective parcels in time through digital signage installed at several places inside the collective building.

As a representative example, parcel delivery information may be given to a user at the delivery address of a parcel through digital signage installed at the entrance to a parking lot. Specifically, a parking management local server configured to manage a parking lot may recognize a vehicle license number of a vehicle entering the parking lot through a license plate recognition (LPR) system installed at a barrier gate of the parking lot. In an embodiment according to the present disclosure, the delivery parcel management server may receive parcel delivery information from a parcel locker installed at an underground parking lot and transmit the delivery parcel information to the parking management local server, and the parking management local server may get the delivery address of the parcel based on the received delivery parcel information and display an arrival notice of the parcel and the location of the parcel locker through digital signage installed near a barrier gate when a vehicle registered to the address enters the parking lot *(i.e.,* a vehicle license number of the vehicle is recognized by LPR).

In this way, a resident or user of the collective building can be notified in time (at the time of entering the underground parking lot in the above-described example) of the fact of arrival of a parcel when the parcel delivered to his or her address is kept in the parcel locker and thus can conveniently retrieve the parcel. More specific examples and other embodiments of the present disclosure will be described below in more detail with reference to the accompanying drawings.

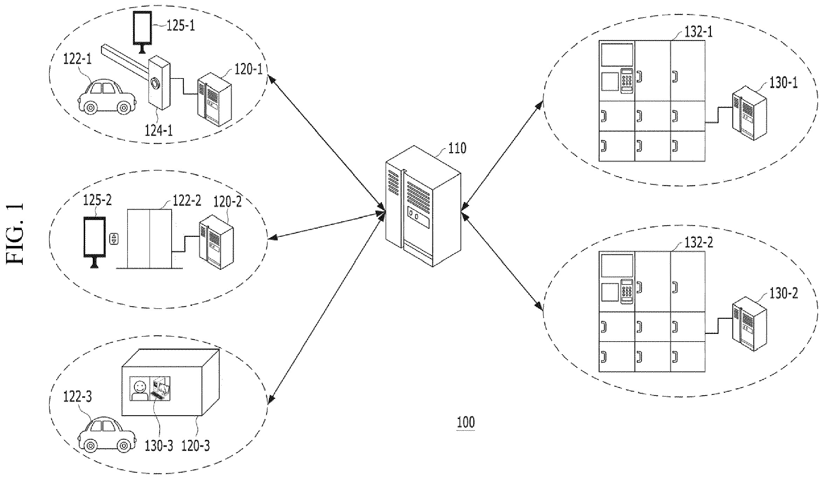

FIG. 1 illustrates an example delivery parcel management system 100 to manage a delivered parcel inside a collective building according to at least some embodiments of the present disclosure. Example system 100 may include a delivery parcel management server 110 and management devices 130-1 and 130-2 communicatively connected to delivery parcel management server 110 and configured to manage one or more parcel lockers 132-1 and 132-2. Also, example system 100 may be communicatively connected to a parking management local server 120-1 configured to manage entry into and exit from a parking lot, an elevator management server 120-2 configured to manage an elevator of the collective building and a security office device 130-3 installed at a security office 120-3 at the entrance to the collective building.

In an example, delivery parcel management server 110 may be a standalone computing device installed inside the collective building. However, the type of delivery parcel management server 110 is not limited thereto. In another example, delivery parcel management server 110 may be various types of computing devices installed outside the collective building. Also, delivery parcel management server 110, management devices 130-1 and 130-2 of respective parcel lockers 132-1 and 132-2, security office device 130-3, parking management local server 120-1 and elevator management server 120-2 are communicatively connected via a network. The network may include, for example, a PAN (personal area network), a LAN (local area network), a WAN (wide area network), a cable network, a satellite network, a cellular network, a GSM (Global System for Mobile Communications) network, a CDMA (Code Division Multiple Access) network, an LTE (Long Term Evolution) network, an LTE-A (Long Term Evolution-Advanced) network, a WiMax (Interoperability for Microwave Access) network and a Wi-Fi (Wireless Fidelity) network, but may not be limited thereto. Herein, each of delivery parcel management server 110, parking management local server 120-1 and elevator management server 120-2 may be a standalone server such as single computing device, a server farm including a plurality of servers, a distributed network, a cloud computing structure and any computing device having data transmission/reception functions, data identification functions and data processing functions.

Although it has been described that one or more parcel lockers 132-1 and 132-2 are installed as a first parcel locker 132-1 and a second parcel locker 132-2 inside the collective building, they may be installed outside the collective building in some cases. Likewise, parking management local server 120-1 and elevator management server 120-2 may also be installed inside and/or outside the collective building.

In an embodiment, a first parcel delivered to the collective building may be delivered to first parcel locker 132-1. Herein, first delivery parcel locker 132-1 may be located at an underground parking lot of the collective building. When a parcel is delivered to first delivery parcel locker 132-1, first parcel locker management device 130-1 may generate a first parcel delivery signal and transmit the generated first parcel delivery signal to delivery parcel management server 110. For example, the first parcel delivery signal may include an address to which the first parcel is due to be delivered and a time at which the first parcel was delivered to first parcel locker 132-1. Delivery parcel management server 110 may generate a first delivery notice signal in response to receipt of the first parcel delivery signal. Also, delivery parcel management server 110 may transmit the generated first delivery notice signal to parking management local server 120-1 that manages the parking lot of the collective building. Parking management local server 120-1 may include a first database including each address of the collective building and information about a vehicle license number of a vehicle and a user related to the address and may add, to the first database, information about the delivery of the first parcel in association with the delivery address included in the first delivery notice signal in response to receipt of the first delivery notice signal. Then, parking management local server 120-1 may check whether the vehicle related to the delivery address included in the first delivery notice signal has entered the parking lot and transmit display information about the delivered parcel to a signage 125-1 installed at the entrance to the parking lot, and signage 125-1 that has received the display information may display first delivery information about the first parcel delivered to first parcel locker 132-1. In some additional examples, the first parcel delivery signal may further include the location of first parcel locker 132-1.

In some examples, parking management local server 120-1 may recognize a vehicle license number of a vehicle entering the parking lot through an LPR system installed at the entrance to the parking lot and search the first database for the information about the delivery of the first parcel based on the recognized vehicle license number. Thus, parking management local server 120-1 can check whether the vehicle related to the delivery address included in the first delivery notice signal has entered the parking lot.

Meanwhile, when the parcel is retrieved from first delivery parcel locker 132-1, first parcel locker management device 130-1 may generate a first parcel retrieval signal and transmit the first parcel retrieval signal to delivery parcel management server 110. The first parcel retrieval signal may include the fact of retrieval of the first parcel and a retrieval time. Delivery parcel management server 110 may generate a first retrieval notice signal in response to receipt of the first parcel retrieval signal and transmit the first retrieval notice signal to parking management local server 120-1. Parking management local server 120-1 may add, to the first database, information about the retrieval of the first parcel in association with the delivery address included in the first retrieval notice signal in response to receipt of the first retrieval notice signal.

In some examples, a user at each address of the collective building may set in advance whether delivery parcel information is to be displayed, for example, partly, entirely or not at all, on signage 125-1. Then, the first database of parking management local server 120-1 may further store the value previously set by the user in association with his or her address, and parking management local server 120-1 may display information about delivery of the first parcel on signage 125-1 based on the preset value. In an additional example, the information about the delivery parcel displayed on signage 125-1 may include the location of first parcel locker 132-1, and signage 125-1 may display the location of the first locker.

In another embodiment, a second parcel delivered to the collective building may be delivered to second parcel locker 132-2. Herein, second parcel locker 132-2 may be located at a lobby of the collective building. When a parcel is delivered to second delivery parcel locker 132-2, second parcel locker management device 130-2 may generate a second parcel delivery signal and transmit the generated second parcel delivery signal to delivery parcel management server 110. For example, the second parcel delivery signal may include an address to which the second parcel is due to be delivered and a time at which the second parcel was delivered to second parcel locker 132-2. Delivery parcel management server 110 may generate a second delivery notice signal in response to receipt of the second parcel delivery signal. Also, delivery parcel management server 110 may transmit the generated second delivery notice signal to elevator management server 120-2 that manages the elevator of the collective building. Elevator management server 120-2 may include a second database including each address of the collective building, and may add, to the second database, information about the delivery of the second parcel in association with the delivery address included in the second delivery notice signal in response to receipt of the second delivery notice signal. Then, when elevator management server 120-2 checks an input of the floor number related to the delivery address included in the second delivery notice signal, i.e., when a resident at the address enters the floor number at the elevator, elevator management server 120-2 may transmit display information to a signage 125-2 installed at the elevator so that the information about the delivery of the second parcel can be displayed on signage 125-2. In some examples, signage 125-2 may be installed at least one of inside and outside the elevator. Also, the floor number of the elevator may be input inside or outside the elevator.

In this example, when the parcel is retrieved from second delivery parcel locker 132-2, second parcel locker management device 130-2 may generate a second parcel retrieval signal and transmit the second parcel retrieval signal to delivery parcel management server 110. The second parcel retrieval signal may include the fact of retrieval of the second parcel and a retrieval time. Delivery parcel management server 110 may generate a second retrieval notice signal in response to receipt of the second parcel retrieval signal and transmit the second retrieval notice signal to elevator management server 120-2. Elevator management server 120-2 may add, to the second database, information about the retrieval of the second parcel in association with the delivery address included in the second retrieval notice signal in response to receipt of the second retrieval notice signal.

In yet another embodiment, a third parcel delivered to the collective building may be delivered to a security office located at the entrance to the collective building. When the third parcel is delivered to the security office, security office device 130-3 may receive an input of information about the delivered parcel from a manager of the security office and generate a third parcel delivery signal and transmit the generated third parcel delivery signal to delivery parcel management server 110. The third parcel delivery signal may include an address to which the third parcel is due to be delivered and a time at which the third parcel was delivered to the security office. Delivery parcel management server 110 may generate a third delivery notice signal in response to receipt of the third parcel delivery signal. Also, delivery parcel management server 110 may transmit the generated third delivery notice signal to parking management local server 120-1. Parking management local server 120-1 may search the first database for information about a user corresponding to the delivery address included in the third parcel delivery signal in response to receipt of the third delivery notice signal. Then, when the user information is confirmed, parking management local server 120-1 may transmit the confirmed user information together with the third delivery notice signal to a parking management central server (not shown). The parking management central server may notify the user of whether the third parcel has been delivered, based on the received user information and third delivery notice signal. In this example, when the user is notified that the third parcel has been delivered to the security office through his or her device and enters the collective building, the user may, for example, drive through the security office to retrieve the third parcel.

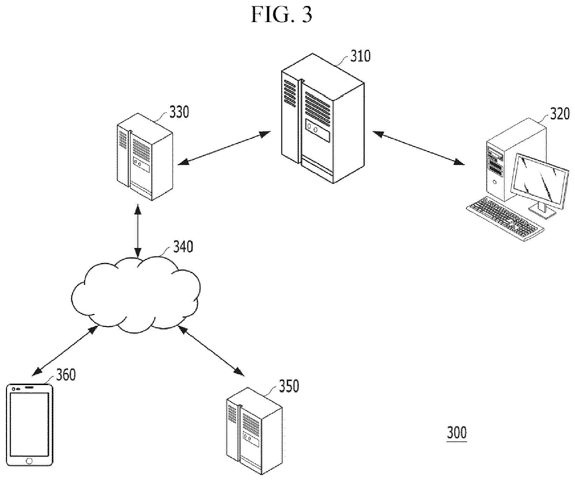

Meanwhile, when the parcel is retrieved from the security office, security office device 130-3 may generate a third parcel retrieval signal including the fact of retrieval of the third parcel and a retrieval time and transmit the third parcel retrieval signal to delivery parcel management server 110. Delivery parcel management server 110 may generate a third retrieval notice signal in response to receipt of the third parcel retrieval signal and transmit the third retrieval notice signal to parking management local server 120-1. Then, parking management local server 120-1 may transmit the received third retrieval notice signal to the parking management central server. A specific example where information about a parcel delivered to the security office is transmitted from the parking management central server (not shown) to a user device through parking management local server 120-1 will be described below with reference to FIG. 3.

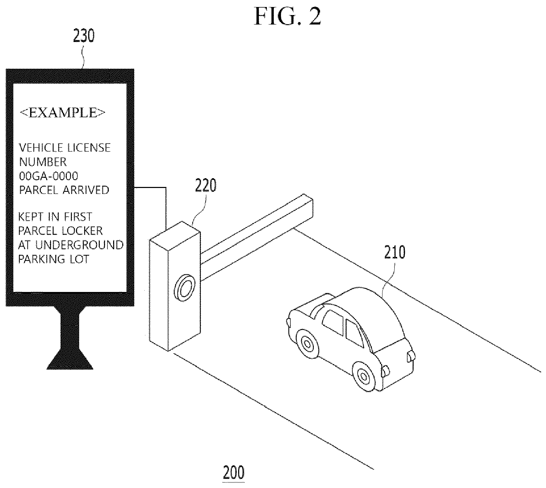

FIG. 2 illustrates an example where when a vehicle enters a parking lot inside a collective building, information about a parcel delivered to a first parcel locker is provided according to at least some embodiments of the present disclosure. In an example, a driver of a vehicle 210 may drive vehicle 210 to pass a barrier gate 220 and enter the parking lot inside the collective building in order to park vehicle 210 in the parking lot. Herein, there may be a parcel delivered to the driver of vehicle 210. The parcel delivered to the driver of vehicle 210 may be kept in, for example, first parcel locker 132-1 installed at the underground parking lot shown in FIG. 1. As shown in FIG. 1, a first parcel locker management device transmits information about the delivery of the parcel to a delivery parcel management server, and the delivery parcel management server transmits a delivery notice signal to a parking management local server (e.g., parking management local server 120-1 shown in FIG. 1) based on the received information. Also, the parking management local server may store the fact of arrival of the parcel in a database (e.g., the first database in which each address and vehicle information are matched with each other and stored as described above with reference to FIG. 1) for a corresponding address based on the received delivery notice signal.

As a non-limiting example, when vehicle 210 passes barrier gate 220, a camera installed at barrier gate 220 acquires an image of a number plate of vehicle 210 and the parking management local server may identify a vehicle license number of vehicle 210 through an LPR process based on the acquired image of the number plate. Then, the parking management local server may search the database for whether the parcel has been delivered to the address of vehicle 210 and transmit display information about the delivered parcel to a signage 230 installed near barrier gate 220.

In the example shown in FIG. 2, signage 230 displays the vehicle license number, an arrival notice of the parcel and the location of keeping the parcel as parcel delivery information. However, in some embodiments, a user at each address of the collective building may set in advance whether delivery parcel information is to be displayed, for example, partly, entirely or not at all, on signage 230. Then, the database of the parking management local server may further store the value previously set by the user in association with his or her address, and the parking management local server may display information about delivery of the parcel on the signage based on the preset value.

Thus, as shown in FIG. 2, when the driver of vehicle 210 enters the parking lot inside the collective building, he or she may check information about the parcel delivered to him or her through signage 230 installed near barrier gate 220 and retrieve the delivered parcel at the underground parking lot before going to his or her house.

FIG. 3 illustrates an example of a system in which a parking management local server, a user mobile device and a parking management central server are communicatively connected via a network according to at least some embodiments of the present disclosure. This system 300 may include a delivery parcel management server 310, a security office device 310 and a parking management local server 330. Also, system 300 may include a parking management central server 350 and a user device 360 communicatively connected to parking management local server 330 via a network 340. Herein, network 340 includes, for example, the Internet, but is not limited thereto.

The embodiment shown in FIG. 3 is provided to specifically describe data exchange and data processing between each server and each device in an example where when a parcel is delivered to security office 120-3, the user drives through the security office 120-3 at the entrance to the collective building to retrieve the parcel as shown in FIG. 1. Therefore, delivery parcel management server 310, security office device 310 and parking management local server 330 shown in FIG. 3 may perform identical or similar functions to those of delivery parcel management server 110, security office device 130-3 and parking management local server 120-1 shown in FIG. 1.

In an illustrative embodiment, security office device 310 may be installed inside the security office, and when a parcel is delivered to security office device 310, security office device 310 may receive an input of information about the delivered parcel from the manager of the security office and generate a parcel delivery signal. Then, security office device 310 may transmit the parcel delivery signal to delivery parcel management server 310. Delivery parcel management server 310 may generate a delivery notice signal in response to the received parcel delivery signal and transmit the delivery notice signal to parking management local server 330. Parking management local server 330 may recognize a vehicle license number of a vehicle entering a parking lot inside the collective building. Also, parking management local server 330 may be connected to parking management central server 350 via network 340, and parking management central server 350 may be connected to user device 360 via network 340. Parking management local server 330 may search the database included in parking management local server 330 for user information corresponding to a delivery address included in the parcel delivery signal based on the received delivery notice signal and the recognized vehicle license number. Then, parking management local server 330 may transmit the delivery notice signal and the user information to parking management central server 350. Parking management central server 350 may notify user device 360 of whether the parcel has been delivered, based on the information received from parking management local server 330.

Herein, user device 360 may be notified of whether the parcel has been delivered through an application or a text message. As a non-limiting example, a user of user device 360 may use an application related to delivery parcel management and parking management to check in advance whether the parcel has been delivered before he or she leaves for his or her address. That is, the user may access parking management central server 350 through the application on user device 360 to request a check on whether the parcel has been delivered, and parking management central server 350 may check whether the parcel has been delivered to the user's address received through parking management local server 330 and transmit a corresponding signal to user device 360. Thus, the user can check whether the parcel has been delivered to his or her address. In another non-limiting example, the user may activate the application on user device 360 and allow the application to check the current location of user at the same time. Thus, parking management central server 350 may track the location of user device 360 to confirm that user device 360 is within a predetermined range around the user's address. For example, when the user of user device 360 is located 10 minutes before arriving at the address in consideration of traffic conditions, parking management central server 350 may be configured to transmit a signal about the delivery of the parcel to user device 360. In this way, the user may be notified of the fact of arrival of the parcel at the security office through user device 360 before arriving at his or her address and thus may drive through the entrance to the collective building to easily receive the delivered parcel in time.

Meanwhile, when the delivered parcel is retrieved from the security office, a security office device 320 may receive an input of information about the retrieval of the parcel from the manager of the security office and generate a third parcel retrieval signal. Then, security office device 320 may transmit the third parcel retrieval signal to delivery parcel management server 310. Delivery parcel management server 310 may generate a retrieval notice signal in response to the received parcel retrieval signal and transmit the retrieval notice signal to parking management local server 330. Parking management local server 330 may transmit the received retrieval notice signal and user information to parking management central server 350. Parking management central server 350 may notify user device 360 of whether the parcel has been retrieved, based on the information received from parking management local server 330. In another example, when the parcel is retrieved, parking management central server 350 may store retrieval information in the database so as not to further notify user device 360 of whether the parcel, which was already retrieved, has been delivered.

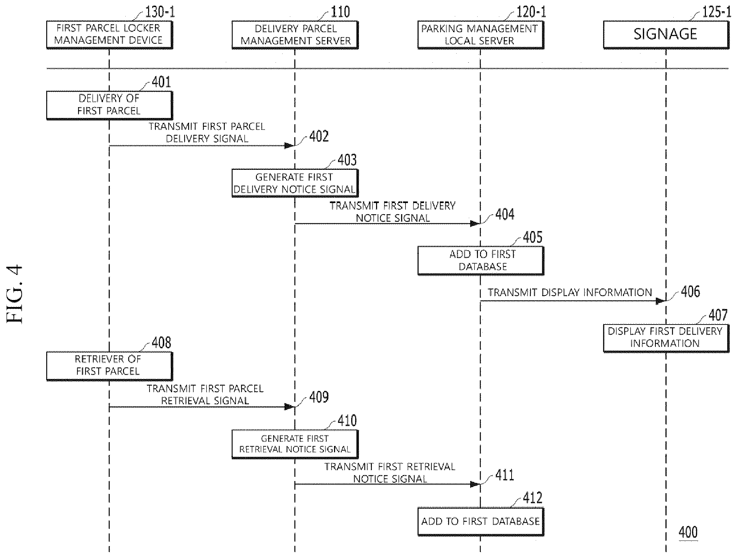

FIG. 4 is a flowchart showing an example process of a delivery parcel management method according to at least some embodiments of the present disclosure. A process 400 shown in FIG. 4 may be performed on the system described above with reference to FIG. 1, and, thus, the same components as those in FIG. 1 are assigned the same reference numerals. Before process 400 begins at a step 401, parking management local server 120-1 of the collective building may receive information, such as address and vehicle license number, from a resident or user of the collective building. Parking management local server 120-1 may store and manage the received address and vehicle license number in association with each other in the first database. In some examples, the user may set in advance whether delivery information about a first parcel is to be displayed on signage 125-1. The first database may further store the value previously set by the user in association with his or her address and vehicle license number.

Process 400 may begin at step 401 where a first parcel is delivered to a first parcel locker. The first parcel locker may be, for example, an unmanned parcel locker located at an underground parking lot of the collective building. At step 401, when the first parcel is delivered to the first parcel locker, first parcel locker management device 130-1 may generate a first parcel delivery signal. Process 400 may continue from step 401 to a step 402 where the first parcel delivery signal is transmitted. At step 402, first parcel locker management device 130-1 may transmit the first parcel delivery signal to delivery parcel management server 110. In some examples, the first parcel delivery signal may include an address to which the first parcel is due to be delivered and a time at which the first parcel was delivered to first parcel locker. In some additional examples, the first parcel delivery signal may further include information such as the location of first parcel locker. Process 400 may continue from step 402 to a step 403 where delivery parcel management server 110 generates a first delivery notice signal in response to receipt of the first parcel delivery signal. When delivery parcel management server 110 receives the first parcel delivery signal generated at step 402, delivery parcel management server 110 may generate the first delivery notice signal. Process 400 may continue from step 403 to a step 404 where the first delivery notice signal is transmitted. At step 404, delivery parcel management server 110 may transmit the generated first delivery notice signal to parking management local server 120-1. Process 400 may continue from step 404 to a step 405 where information is added to the first database. At step 405, parking management local server 120-1 may add, to the first database, information about the first parcel in association with the delivery address included in first delivery notice signal in response to receipt of the first delivery notice signal. Process 400 may continue from step 405 to a step 406 where display information is transmitted. At step 406, parking management local server 120-1 may check whether a vehicle related to the delivery address included in the first delivery notice signal has entered the parking lot and then transmit display information about the delivered parcel to signage 125-1 installed at the entrance to the parking lot. In some examples, parking management local server 120-1 may recognize a vehicle license number of a vehicle entering the parking lot through an LPR system installed at the entrance to the parking lot and search the first database for the information about the delivery of the first parcel based on the recognized vehicle license number. Thus, parking management local server 120-1 can check whether the vehicle has entered the parking lot. Process 400 may continue from step 406 to a step 407 where first delivery information is displayed. At step 407, when signage 125-1 receives the display information about the delivered parcel, signage 125-1 may display the first delivery information about the first parcel.

When the first parcel is retrieved from first delivery parcel locker 132-1, process 400 may continue to a step 408. When the user who checked the first delivery information displayed on signage 125-1 retrieves the first parcel from the first parcel locker, first parcel locker management device 130-1 may generate a first parcel retrieval signal. Process 400 may continue from step 408 to a step 409 where the first parcel retrieval signal is transmitted. At step 409, first parcel locker management device 130-1 may transmit the generated first parcel retrieval signal to delivery parcel management server 110. In some examples, the first parcel retrieval signal may include the fact of retrieval of the first parcel and a retrieval time. Process 400 may continue from step 409 to a step 410 where a first retrieval notice signal is generated. At step 410, delivery parcel management server 110 may generate the first retrieval notice signal in response to receipt of the first parcel retrieval signal. Process 400 may continue from step 410 to a step 411 where the first retrieval notice signal is transmitted. At step 411, delivery parcel management server 110 may transmit the generated first retrieval notice signal to a parking management local server. Process 400 may continue from step 411 to a step 412 where information is added to the first database. At step 412, the parking management local server may add, to the first database, information about the retrieval of the first parcel in association with the delivery address in response to receipt of the first retrieval notice signal.

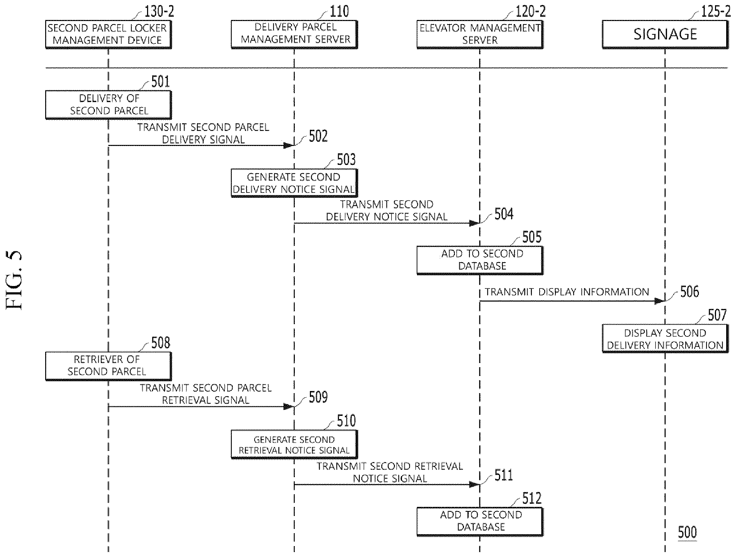

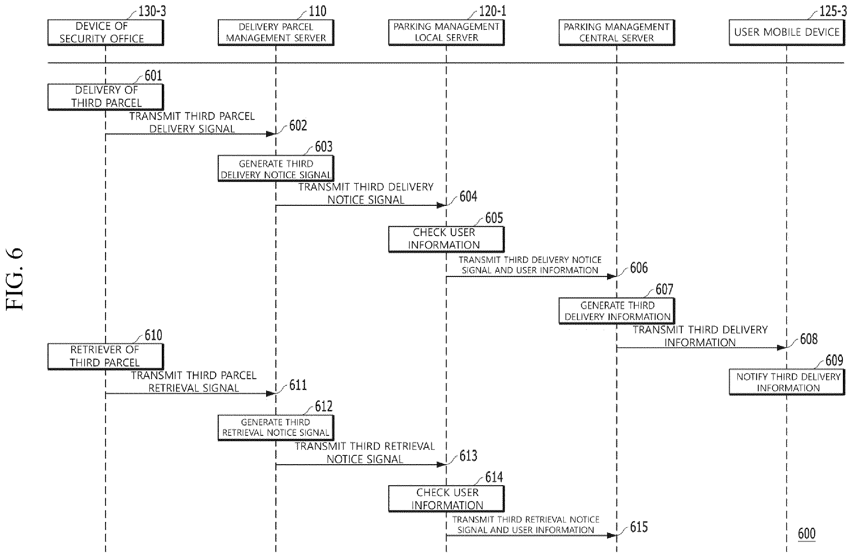

FIG. 5 is a flowchart showing an example process of a delivery parcel management method according to at least some other embodiments of the present disclosure, and FIG. 6 is a flowchart showing an example process of a delivery parcel management method according to at least some other embodiments of the present disclosure. A process 500 shown in FIG. 5 and a process 600 shown in FIG. 6 may be performed on the system described above with reference to FIG. 1, and, thus, the same components as those in FIG. 1 are assigned the same reference numerals. Processes 500 and 600 shown in FIG. 5 and FIG. 6 may include one or more operations, functions, or actions as illustrated by one or more of steps 501 to 512 and 601 to 612. The schematic operations shown in FIG. 5 and FIG. 6 are only provided as examples, and some of the operations may be optional, combined into fewer operations, or expanded into additional operations without departing from the scope of the present disclosure. However, among the steps of processes 500 and 600 shown in FIG. 5 and FIG. 6, substantially the same operations as those of process 400 shown in FIG. 4 will not be described in detail.

Referring to FIG. 5, process 500 may begin at a step 501 where a second parcel is delivered to a second parcel locker. The second parcel locker may be, for example, an unmanned parcel locker located at a lobby of the collective building. When the second parcel is delivered to the second parcel locker, second parcel locker management device 130-2 may transmit a second parcel delivery signal to delivery parcel management server 110 (step 502). Delivery parcel management server 110 may generate a second delivery notice signal based on the received second parcel delivery signal (step 503).

Then, at a step 504, delivery parcel management server 110 may transmit the generated second delivery notice signal to elevator management server 120-2 that manages an elevator of the collective building. Process 500 may continue from step 504 to a step 505 where information is added to the second database. In some examples, elevator management server 120-2 may include the second database including each address of the collective building. At step 505, elevator management server 120-2 may add, to the second database, delivery information about the second parcel in association with a delivery address included in the second delivery notice signal in response to receipt of the second delivery notice signal. Process 500 may continue from step 505 to a step 506 where display information is transmitted. At step 506, elevator management server 120-2 may check an input of the floor number related to the delivery address included in the second delivery notice signal and may transmit display information about the delivered parcel to signage 125-2 installed near the elevator. In some examples, when the user enters the floor number at the elevator, elevator management server 120-2 may search the second database to check the input of the floor number. Process 500 may continue from step 506 to a step 507 where second delivery information is displayed. At step 507, when signage 125-2 receives the display information about the delivered parcel, signage 125-2 may display the second delivery information about the second parcel. Then, at a step 508, when the user who checked the second delivery information displayed through signage 125-2 retrieves the parcel from the second parcel locker, second parcel locker management device 130-2 may transmit a second parcel retrieval signal to delivery parcel management server 110. Subsequent steps are the same as those shown in FIG. 1 and FIG. 4, and, thus, a repeated description thereof will be omitted.

Referring to FIG. 6, process 600 may begin at a step 601 where a third parcel is delivered to a security office. When the third parcel is delivered to the security office, security office device 130-3 may transmit a third parcel delivery signal, which has been generated based on information about the parcel input by a manager of the security office, to delivery parcel management server 110 (step 602). When delivery parcel management server 110 receives the third parcel delivery signal, delivery parcel management server 110 may generate a third delivery notice signal (step 603) and transmit the third delivery notice signal to parking management local server 120-1 (step 604).

Then, at a step 605, parking management local server 120-1 may search the first database for information about a user corresponding to the delivery address included in the third parcel delivery signal in response to receipt of the third delivery notice signal. When the information about the user corresponding to the delivery address is confirmed, parking management local server 120-1 may transmit the confirmed user information together with the third delivery notice signal to a parking management central server (step 606). Process 600 may continue from step 606 to a step 607 where third delivery information is generated. At step 607, the parking management central server may generate the third delivery information based on the user information and third delivery notice signal received from parking management local server 120-1. In some examples, the parking management central server may search for the location of the user's mobile device and may add it to the third delivery information. In some other examples, the parking management central server may check whether the parcel has been delivered and may add it to the third delivery information. The parking management central server may transmit the generated third delivery information to the user's mobile device (step 608). When the user receives the third delivery information, the user may be notified of the fact of arrival of the third parcel through his or her mobile device 125-3 (step 609). Then, at step 609, when the user who was notified of delivery information through mobile device 125-3 retrieves the parcel from the security office (step 610), a third parcel retrieval signal generated based on parcel retrieval information input by the manager of the security office may be transmitted (step 611). Subsequent steps are the same as those shown in FIG. 1 and FIG. 4, and, thus, a repeated description thereof will be omitted.

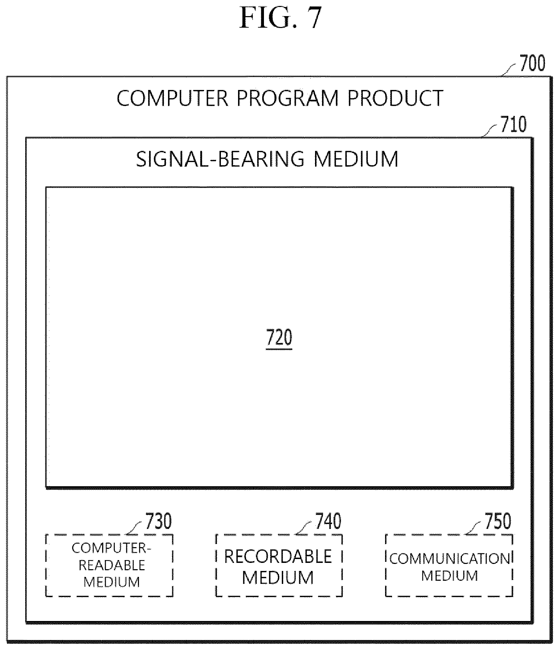

FIG. 7 illustrates a computer program product 700 that can be used to manage a delivered parcel according to at least some embodiments of the present disclosure. An illustrative embodiment of example computer program product 700 is provided using a signal bearing medium 710. In some embodiments, one or more signal bearing mediums 710 of computer program product 700 may include a computer-readable medium 730, a recordable medium 740 and/or a communication medium 750.

An instruction 702 included in signal bearing medium 710 may be implemented by a computing device such as delivery parcel management server 110, parcel locker management devices 130-1, 130-2 and 1303-3, parking management local server 120-1, elevator management server 120-2, security office device 130-3 and/or the parking management central server illustrated in FIG. 1. Instruction 720 may include at least one of one or more instructions to cause the computing device to receive, from a management device of a first parcel locker, a first parcel delivery signal including an address to which a first parcel delivered to the first parcel locker is due to be delivered and a time at which the first parcel was delivered to the first parcel locker; one or more instructions to cause the computing device to generate, in response to receipt of the first parcel delivery signal, a first delivery notice signal including the delivery address and the delivery time included in the first parcel delivery signal and information about a place to which the first parcel was delivered; one or more instructions to cause the computing device to transmit the generated first delivery notice signal to a parking management local server configured to manage a parking lot of the collective building; one or more instructions to cause the computing device to receive, from a management device of a second parcel locker, a second parcel delivery signal including an address to which a second parcel delivered to the second parcel locker is due to be delivered and a time at which the second parcel was delivered to the second parcel locker; one or more instructions to cause the computing device to generate, in response to receipt of the second parcel delivery signal, a second delivery notice signal including the delivery address and the delivery time included in the second parcel delivery signal and information about a place to which the second parcel was delivered; one or more instructions to cause the computing device to transmit the generated second delivery notice signal to an elevator management server configured to manage an elevator of the collective building; one or more instructions to cause the computing device to receive, from a device of a security office located at the entrance to the collective building, a third parcel delivery signal including an address to which a third parcel delivered to the security office is due to be delivered and a time at which the third parcel was delivered to the security office; one or more instructions to cause the computing device to generate, in response to receipt of the third parcel delivery signal, a third delivery notice signal including the delivery address and the delivery time included in the third parcel delivery signal and information about a place to which the third parcel was delivered; and one or more instructions to cause the computing device to transmit the generated third delivery notice signal to the parking management local server.

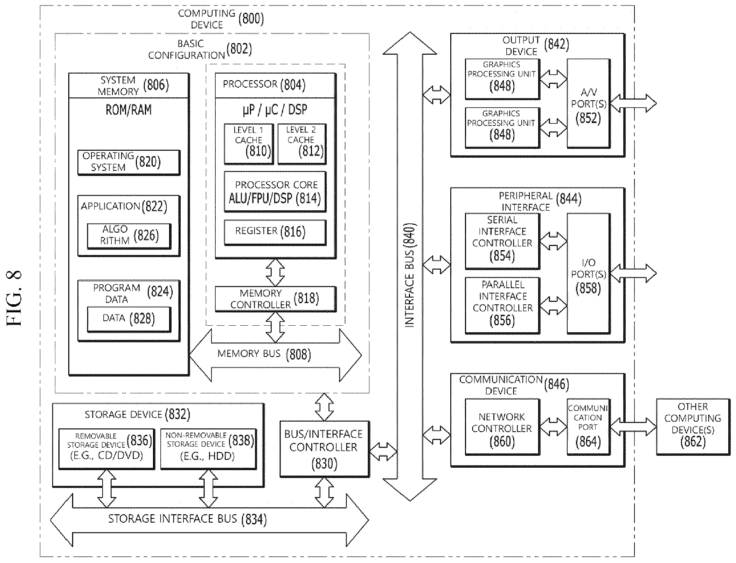

FIG. 8 is a block diagram showing an illustrative example of a computing device 800 arranged according to at least some embodiments of the present disclosure. In an example basic configuration 802, computing device 800 may include one or more processors 804 and a system memory 806. A memory bus 808 can be used for communicating between processor 804 and system memory 806.

Depending on the desired configuration, processor 804 may be of any type including, but not limited to, a microprocessor (µP), a microcontroller (µC), a digital signal processor (DSP), or any combination thereof. Processor 804 may include one or more levels of cache, such as a level one cache 810 and a level two cache 812, a processor core 814, and a register 816. Processor core 814 may include an arithmetic logic unit (ALU), a floating point unit (FPU), a digital signal processing core (DSP Core), or any combination thereof. A memory controller 818 may also be used with processor 804, or in some embodiments, memory controller 818 may be an internal part of processor 804.

Depending on the desired configuration, system memory 806 may be of any type including, but not limited to, a volatile memory (such as RAM), a non-volatile memory (such as ROM, flash memory, etc.) or any combination thereof. System memory 806 may include an operating system 820, one or more applications 822 and program data 824. Application 822 may include an algorithm 826 that is arranged to perform the functions as described herein including the functional blocks and/or actions described regarding delivery parcel management server 310, parking management local server 330 and parking management central server 350 of FIG. 3 and/or process 600 of FIG. 6. Program data 824 may include data 828 for use with algorithm 826, for example, data corresponding to static network conditions or the like. In some embodiments, application 822 may be arranged to operate with program data 824 on operating system 820 such that implementations of determining optimum delivery conditions may be provided as described herein. For example, parking management central server 350 may include all or a portion of computing device 800 and may be capable of performing all or a portion of application 822 such that implementations of determining optimum delivery conditions may be provided as described herein. This described basic configuration is illustrated in FIG. 8 by those components within dashed line 802.

Computing device 800 may have additional features or functionality, and additional interfaces to facilitate communications between basic configuration 802 and any required devices and interfaces. For example, a bus/interface controller 830 may be used to facilitate communications between basic configuration 802 and one or more data storage devices 832 via a storage interface bus 834. Data storage devices 832 may be removable storage devices 836, non-removable storage devices 838, or a combination thereof. Examples of removable storage and non-removable storage devices include magnetic disk devices such as flexible disk drives and hard-disk drives (HDD), optical disk drives such as compact disk (CD) drives or digital versatile disk (DVD) drives, solid state drives (SSD), and tape drives. Examples of computer storage media may include volatile and nonvolatile, removable and non-removable media implemented in any method or technology for storage of information, such as computer readable instructions, data structures, program modules, or other data.

System memory 806, removable storage 836 and non-removable storage 838 are all examples of computer storage media. The computer storage media include, but are not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which may be used to store the desired information and which may be accessed by computing device 800. Any such computer storage media may be part of device 800.

Computing device 800 may also include an interface bus 840 for facilitating communication from various interface devices (e.g., output interfaces, peripheral interfaces, and communication interfaces) to basic configuration 802 via a bus/interface controller 830. An example output device 842 may include a graphics processing unit 848 and an audio processing unit 850, which may be configured to communicate with various external devices, such as a display or a speaker, via one or more A/V ports 852. Graphics processing unit 848 is illustrated in FIG. 8 as a component of the output device, but can perform operations according to some embodiments in addition to processor 804. According to some embodiments of the present disclosure, graphics processing unit 848 may be configured to perform various neural network related operations such as learning of a neural network, processing with a neural network, etc. Examples of peripheral interfaces 844 may include a serial interface controller 854 or a parallel interface controller 856, which may be configured to communicate with external devices, such as input devices (e.g., keyboard, mouse, pen, voice input device, touch input device, etc.) or other peripheral devices (e.g., printer, scanner, etc.), via one or more I/O ports 858. An example communication device 846 includes a network controller 860, which may be arranged to facilitate communications with one or more other computing devices 862 over a network communication via one or more communication ports 864.

Computing device 800 may also be implemented as a personal computer including both laptop computer and non-laptop computer configurations. In addition, computing device 800 may be implemented as part of a wireless base station or other wireless system or device.

The above description of the present disclosure is provided for the purpose of illustration, and it would be understood by a person with ordinary skill in the art that various changes and modifications may be made without changing technical conception and essential features of the present disclosure. Thus, it is clear that the above-described examples are illustrative in all aspects and do not limit the present disclosure. For example, each component described to be of a single type can be implemented in a distributed manner. Likewise, components described to be distributed can be implemented in a combined manner.

The claimed subject matter is not limited in scope to the particular implementations described herein. For example, some implementations may be in hardware, such as employed to operate on a device or combination of devices, for example, whereas other implementations may be in software and/or firmware. Likewise, although claimed subject matter is not limited in scope in this respect, some implementations may include one or more articles, such as a signal bearing medium, a storage medium and/or storage media. This storage media, such as CD-ROMs, computer disks, flash memory, or the like, for example, may have instructions stored thereon, that, when executed by a computing device, such as a computing system, computing platform, or other system, for example, may result in execution of a processor in accordance with the claimed subject matter, such as one of the implementations previously described, for example. As one possibility, a computing device may include one or more processing units or processors, one or more input/output devices, such as a display, a keyboard and/or a mouse, and one or more memories, such as static random access memory, dynamic random access memory, flash memory, and/or a hard drive.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples can be implemented, individually and/or collectively, by a wide range of hardware, software, firmware, or virtually any combination thereof. In one embodiment, several portions of the subject matter described herein may be implemented via Application Specific Integrated Circuits (ASICs), Field Programmable Gate Arrays (FPGAs), digital signal processors (DSPs), or other integrated formats. However, those skilled in the art will recognize that some aspects of the embodiments disclosed herein, in whole or in part, can be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein are capable of being distributed as a program product in a variety of forms, and that an illustrative example of the subject matter described herein applies regardless of the particular type of signal bearing medium used to actually carry out the distribution.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

## Claims

1. A method performed on a delivery parcel management server to manage a parcel delivered to a collective building, comprising:
receiving, from a management device of a first parcel locker, a first parcel delivery signal including an address to which a first parcel delivered to the first parcel locker is due to be delivered and a time at which the first parcel was delivered to the first parcel locker;
in response to receipt of the first parcel delivery signal, generating a first delivery notice signal including the delivery address and the delivery time included in the first parcel delivery signal and information about a place to which the first parcel was delivered; and
transmitting the generated first delivery notice signal to a parking management local server configured to manage a parking lot of the collective building,
wherein the parking management local server includes a first database including each address of the collective building and information about a vehicle license number of a vehicle and a user related to the address and is configured to add, to the first database, information about the delivery of the first parcel in association with the delivery address included in the first delivery notice signal in response to receipt of the first delivery notice signal, check whether the vehicle related to the delivery address included in the first delivery notice signal has entered the parking lot and display the information about the delivery of the first parcel delivered to the first parcel locker through a display installed at the entrance to the parking lot.

2. The method of claim 1, further comprising:
receiving, from the management device of the first parcel locker, a first parcel retrieval signal including the fact of retrieval of the first parcel delivered to the first parcel locker and a retrieval time; and
generating a first retrieval notice signal based on the received first parcel retrieval signal to transmit the first retrieval notice signal to the parking management local server,
wherein the parking management local server is further configured to add, to the first database, information about the retrieval of the first parcel in association with the delivery address included in the first retrieval notice signal in response to receipt of the first retrieval notice signal.

3. The method of claim 1, wherein the parking management local server checks whether the vehicle related to the delivery address included in the first delivery notice signal has entered the parking lot by recognizing a vehicle license number of the vehicle entering the parking lot through a license plate recognition system installed at the entrance into the parking lot and searching the first database for the information about the delivery of the first parcel based on the recognized vehicle license number.

4. The method of claim 1, wherein a preset value was set by a user at each address of the collective building and the first database of the parking management local server further stores the preset value for displaying delivery parcel information to be displayed on the display in association with corresponding address, and the parking management local server displays the information about the delivery of the first parcel delivered to the first parcel locker through the display based on the preset value.

5. The method of any one of claims 1 to 4, further comprising:
receiving, from a management device of a second parcel locker, a second parcel delivery signal including an address to which a second parcel delivered to the second parcel locker is due to be delivered and a time at which the second parcel was delivered to the second parcel locker;
in response to receipt of the second parcel delivery signal, generating a second delivery notice signal including the delivery address and the delivery time included in the second parcel delivery signal and information about a place to which the second parcel was delivered; and
transmitting the generated second delivery notice signal to an elevator management server configured to manage an elevator of the collective building,
wherein the elevator management server includes a second database including each address of the collective building, and is configured to add, to the second database, information about the delivery of the second parcel in association with the delivery address included in the second delivery notice signal in response to receipt of the second delivery notice signal and display the information about the delivery of the second parcel delivered to the second parcel locker through a display related to the elevator when the elevator management server checks an input of the floor number related to the delivery address included in the second delivery notice signal through the elevator.

6. The method of claim 5, further comprising:
receiving, from the management device of the second parcel locker, a second parcel retrieval signal including the fact of retrieval of the second parcel delivered to the second parcel locker and a retrieval time; and
generating a second retrieval notice signal based on the received second parcel retrieval signal to transmit the second retrieval notice signal to the elevator management server,
wherein the elevator management server is further configured to add, to the second database,
information about the retrieval of the second parcel in association with the delivery address included in the second retrieval notice signal in response to receipt of the second retrieval notice signal.

7. The method of any one of claims 1 to 4, further comprising:
receiving, from a device of a security office located at the entrance to the collective building, a third parcel delivery signal including an address to which a third parcel delivered to the security office is due to be delivered and a time at which the third parcel was delivered to the security office;
in response to receipt of the third parcel delivery signal, generating a third delivery notice signal including the delivery address and the delivery time included in the third parcel delivery signal and information about a place to which the third parcel was delivered; and
transmitting the generated third delivery notice signal to the parking management local server,
wherein the parking management local server is configured to search the first database for information about a user corresponding to the delivery address included in the third parcel delivery signal in response to receipt of the third delivery notice signal and transmit the user information together with the third delivery notice signal to a parking management central server, and
the parking management central server is configured to notify a device of the user of whether the third parcel has been delivered, based on the received user information and third delivery notice signal.

8. The method of claim 7, further comprising:
receiving, from the device of the security office, a third parcel retrieval signal including the fact of retrieval of the third parcel kept in the security office and a retrieval time; and
generating a third retrieval notice signal based on the received third parcel retrieval signal to transmit the third retrieval notice signal to the parking management local server,
wherein the parking management local server is further configured to transmit the received third retrieval notice signal to the parking management central server.

9. A delivery parcel management system to manage a parcel delivered to a collective building, comprising:
a management device of a first parcel locker that manages delivery and retrieval of a parcel kept in a first parcel locker configured to keep the parcel delivered to the collective building;
a parking management local server configured to manage a parking lot of the collective building; and
a delivery parcel management server communicatively connected to each of the management device of the first parcel locker and the parking management local server,
wherein the delivery parcel management server is configured to receive, from the management device of the first parcel locker, a first parcel delivery signal including an address to which a first parcel delivered to the first parcel locker is due to be delivered and a time at which the first parcel was delivered to the first parcel locker, in response to receipt of the first parcel delivery signal, generate a first delivery notice signal including the delivery address and the delivery time included in the first parcel delivery signal and information about a place to which the first parcel was delivered and transmit the generated first delivery notice signal to the parking management local server, and
the parking management local server includes a first database including each address of the collective building and information about a vehicle license number of a vehicle and a user related to the address and is configured to add, to the first database, information about the delivery of the first parcel in association with the delivery address included in the first delivery notice signal in response to receipt of the first delivery notice signal, check whether the vehicle related to the delivery address included in the first delivery notice signal has entered the parking lot and display the information about the delivery of the first parcel delivered to the first parcel lockerthrough a display installed at the entrance to the parking lot.

10. The delivery parcel management system of claim 9,
wherein the delivery parcel management server is further configured to receive, from the management device of the first parcel locker, a first parcel retrieval signal including the fact of retrieval of the first parcel delivered to the first parcel locker and a retrieval time, generate a first retrieval notice signal based on the received first parcel retrieval signal and transmit the first retrieval notice signal to the parking management local server,
the parking management local server is further configured to add, to the first database, information about the retrieval of the first parcel in association with the delivery address included in the first retrieval notice signal in response to receipt of the first retrieval notice signal.

11. The delivery parcel management system of claim 9 or 10, further comprising:
a management device of a second parcel locker that manages delivery and retrieval of a parcel kept in a second parcel locker configured to keep the parcel delivered to the collective building;
an elevator management server configured to manage an elevator of the collective building,
wherein the delivery parcel management server is further configured to receive, from the management device of the second parcel locker, a second parcel delivery signal including an address to which a second parcel delivered to the second parcel locker is due to be delivered and a time at which the second parcel was delivered to the second parcel locker, in response to receipt of the second parcel delivery signal, generate a second delivery notice signal including the delivery address and the delivery time included in the second parcel delivery signal and information about a place to which the second parcel was delivered and transmit the generated second delivery notice signal to the elevator management server, and
the elevator management server includes a second database including each address of the collective building, and is configured to add, to the second database, information about the delivery of the second parcel in association with the delivery address included in the second delivery notice signal in response to receipt of the second delivery notice signal and display the information about the delivery of the second parcel delivered to the second parcel locker through a display related to the elevator when the elevator management server checks an input of the floor number related to the delivery address included in the second delivery notice signal through the elevator.

12. The delivery parcel management system of claim 11,
wherein the delivery parcel management server is further configured to receive, from the management device of the second parcel locker, a second parcel retrieval signal including the fact of retrieval of the second parcel delivered to the second parcel locker and a retrieval time, generate a second retrieval notice signal based on the received second parcel retrieval signal and transmit the second retrieval notice signal to the elevator management server, and
the elevator management server is further configured to add, to the second database, information about the retrieval of the second parcel in association with the delivery address included in the second retrieval notice signal in response to receipt of the second retrieval notice signal.

13. The delivery parcel management system of claim 9 or 10, further comprising:
a device of a security office located at the entrance to the collective building,
wherein the delivery parcel management server is further configured to receive, from the device of the security office, a third parcel delivery signal including an address to which a third parcel delivered to the security office is due to be delivered and a time at which the third parcel was delivered to the security office, in response to receipt of the third parcel delivery signal, generate a third delivery notice signal including the delivery address and the delivery time included in the third parcel delivery signal and information about a place to which the third parcel was delivered and transmit the generated third delivery notice signal to the parking management local server,
the parking management local server is configured to search the first database for information about a user corresponding to the delivery address included in the third parcel delivery signal in response to receipt of the third delivery notice signal and transmit the user information together with the third delivery notice signal to a parking management central server, and
the parking management central server is configured to notify a device of the user of whether the third parcel has been delivered, based on the received user information and third delivery notice signal.

14. The delivery parcel management system of claim 13,
wherein the delivery parcel management server is further configured to receive, from the device of the security office, a third parcel retrieval signal including the fact of retrieval of the third parcel kept in the security office and a retrieval time, generate a third retrieval notice signal based on the received third parcel retrieval signal and transmit the third retrieval notice signal to the parking management local server, and
the parking management local server is further configured to transmit the received third retrieval notice signal to the parking management central server.

15. A computer-readable storage medium that stores a program to manage a parcel delivered to a collective building, wherein the program includes one or more instructions, when executed by a computing device, cause the computing device to perform:
receiving, from a management device of a first parcel locker, a first parcel delivery signal including an address to which a first parcel delivered to the first parcel locker is due to be delivered and a time at which the first parcel was delivered to the first parcel locker;
in response to receipt of the first parcel delivery signal, generating a first delivery notice signal including the delivery address and the delivery time included in the first parcel delivery signal and information about a place to which the first parcel was delivered; and
transmitting the generated first delivery notice signal to a parking management local server configured to manage a parking lot of the collective building.
